# FASCICULE DE BREVET EUROPEEN

(11) **EP 2 431 235 B1**
(45) Date de publication et mention de la délivrance du brevet: **11.09.2013**
(21) Numéro de dépôt: 11182214.4
(22) Date de dépôt: 21.09.2011
(51) Int. Cl.: B60R 19/16, B65G 69/00

(54) **Butoir d'accostage rotatif pour véhicule**
Drehbarer Anlegepuffer für Fahrzeug
Rotary docking stop for vehicle

(30) Priorité: 21.09.2010 FR 1057570
(43) Date de publication de la demande: 21.03.2012
(73) Titulaire: Lamberet, 01380 Saint Cyr sur Menthon (FR)
(72) Inventeur: Charriere, Jacques, 01660 CHAVEYRIAT (FR); Tuet, Gwénaël, 01000 BOURG EN BRESSE (FR)
(74) Mandataire: Delorme, Nicolas

(56) Documents cités:
- EP-A1- 1 792 785
- EP-A1- 1 902 986
- EP-A1- 1 977 934

## Description

La présente invention concerne un butoir rotatif d'accostage.

Le transport routier implique de charger des marchandises dans un véhicule tel qu'un camion, une remorque ou une semi remorque et de décharger de ces marchandises à destination.

Le chargement et le déchargement peuvent se faire en faisant accoster la partie arrière du véhicule contre un quai ; ceci permet de mettre le plancher de chargement du véhicule sensiblement à la hauteur de l'espace logistique de chargement et de déchargement.

Pour protéger la face arrière du véhicule, l'accostage entre le véhicule et le quai peut être amorti par des butoirs qui ont une action d'amortissement.

D'une part, ces butoirs doivent avoir une action d'amortissement dans la direction longitudinale du véhicule pour amortir le contact lors de l'accostage du véhicule contre le quai.

D'autre part, ces butoirs devraient avoir une action d'amortissement dans la direction verticale du véhicule. En effet, lors de son chargement et déchargement, le débattement des suspensions et l'écrasement des pneumatiques du véhicule varient, ce qui a pour effet de modifier la hauteur du véhicule par rapport au quai. En outre, beaucoup de véhicules sont équipés de suspensions pneumatiques qui permettent de régler la garde au sol ; on utilise couramment la faculté de ces suspensions de pouvoir être réglées selon une direction verticale pour ajuster la hauteur du plancher du véhicule à celle du quai.

On voit ainsi qu'un butoir d'accostage doit pouvoir encaisser des efforts de compression - amortissement dans le sens longitudinal du véhicule - et de cisaillement - amortissement dans le sens vertical du véhicule -.

On connait par le document EP 1977934 A1 un butoir ayant un rouleau métallique monté sur deux joues élastiques.

On connait, par exemple, par le document EP-A-648 644 un butoir constitué d'un cylindre en caoutchouc qui peut être fixé à l'arrière d'un véhicule.

Ce type de butoir présente généralement l'inconvénient de se détériorer rapidement sous l'effet des contacts répétés avec les quais.

Cela impose un passage en atelier pour le remplacement du butoir avec, par conséquent, un cout de pièce et d'immobilisation du véhicule pour l'exploitant

Un but de l'invention est donc de proposer un butoir d'accostage assurant un amortissement longitudinal, vertical tout en présentant une longévité importante.

L'invention concerne un butoir d'accostage destiné à être fixé sur la face arrière d'un véhicule qui comprend au moins un rouleau comprenant une bague interne en acier, une coque externe en acier et une âme élastique en caoutchouc adhérisé sur la bague et sur la coque et comprenant des moyens de fixation du ou des rouleau(x) sur la face arrière du véhicule.

Ainsi, l'invention propose un butoir d'accostage qui possède un rouleau original en ce que ce rouleau possède une âme en matière élastique qui est protégé par une coque métallique. Le rouleau offre ainsi la fonction d'absorption de l'énergie de l'accostage du véhicule avec un quai tout en protégeant l'âme- qui est par nature fragile - en la plaçant dans une coque métallique. L'âme élastique est également protégée au niveau de son axe de rotation par une bague métallique. On voit ainsi que l'âme est protégée aussi bien intérieurement qu'extérieurement. On note que les sections radiales de l'âme restent accessibles ce qui est nécessaire pour permettre à l'âme de se déformer.

Selon une disposition de l'invention, la face extérieure du tube et la face intérieure de la bague reçoivent un traitement thermique. Il est à noter que les faces de la bague et du tube qui sont en contact de l'âme sont dépourvues de traitement thermique de manière à favoriser l'accrochage de l'âme pour offrir un rouleau véritablement monolithique.

Dans une forme de réalisation, la coque présente une forme en ellipsoïde et est dotée d'un retour radial à chacune de ses extrémités.

Dans une autre forme de réalisation, la coque présente une forme cylindrique.

De manière avantageuse, l'âme élastique comprend une série de cavités permettant à l'âme de se déformer. Il s'agit d'une disposition importante de l'invention dans la mesure où les cavités vont permettre à l'âme de répondre en compression et allongement aux sollicitations mécaniques liées à l'accostage.

Dans une forme de réalisation, l'âme présente deux séries de six cavités tronconiques borgnes orientées longitudinalement.

Dans un forme de réalisation, l'âme présente une rainure annulaire à chaque de ses extrémités.

Il peut être prévu que les moyens de fixation comprennent une platine de fixation qui reçoit un axe sur lequel au moins un rouleau est engagé.

En pratique, la platine de fixation comprend une plaque de fond sur laquelle sont fixées au moins deux joues pourvues chacune d'un perçage destiné à recevoir l'axe.

Pour une plus grande longévité, l'âme est réalisée dans un caoutchouc haute résilience.

L'invention concerne également un procédé de fabrication d'un rouleau pour un butoir d'accostage.

Selon l'invention, le procédé présente les étapes consistant à :
- positionner dans un moule la coque et la bague engagée dans la coque dépourvues de traitement de surface ;
- injecter une matière élastique crue dans l'entrefer délimité par la coque et la bague pour former l'âme du rouleau ;
- vulcaniser la matière élastique en produisant une adhérisation de l'âme à la bague et au tube ;
- effectuer un traitement de surface sur la surface extérieure du tube et la surface intérieure de la bague.

Pour sa bonne compréhension, l'invention est décrite en référence au dessin ci annexé représentant à titre d'exemple non limitatif deux formes de réalisation d'un butoir d'accostage selon celle-ci.

Par simplification, les éléments communs aux différentes formes de réalisation portent les mêmes références.
Figure 1 est une vue en perceptive éclatée d'un butoir d'accostage comprenant deux rouleaux fixé sur un châssis de véhicule partiellement représenté.
Figure 2 représente en perspective un rouleau selon une première forme de réalisation ;
Figures 3 et 4 montrent le rouleau de la figure 2 en coupe longitudinale et transversale ;
Figure 5 représente en perspective un rouleau selon une deuxième forme de réalisation ;
Figures 6 et 7 montrent le rouleau de la figure 5 en coupe longitudinale et transversale.

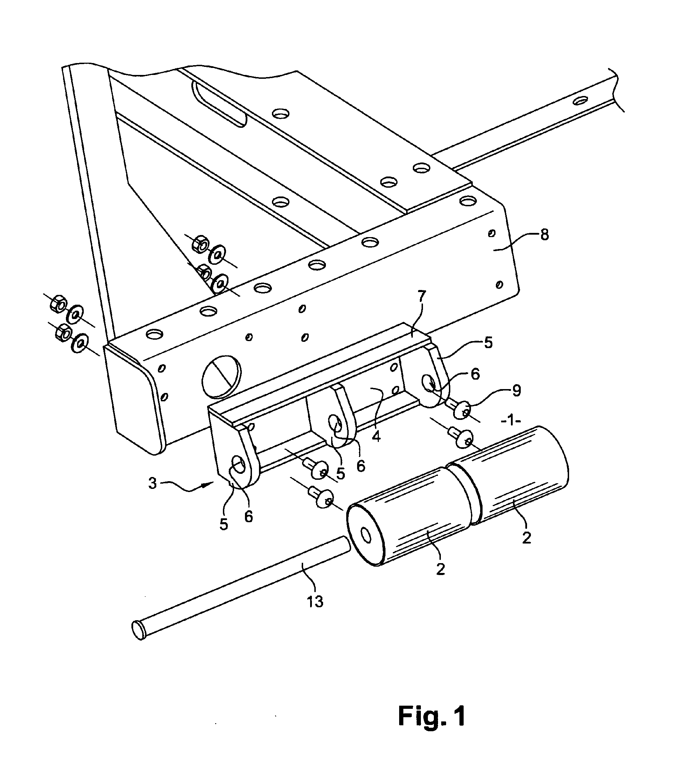

En se reportant à la figure 1, on peut voir la partie arrière d'un châssis de véhicule composé de profilés métalliques.

Le butoir d'accostage 1 est fixé sur l'un de ces profilés. Dans l'exemple de réalisation illustré, le butoir d'accostage 1 possède deux rouleaux 2 cylindriques coaxiaux.

La liaison des rouleaux 2 sur le châssis est réalisée par l'intermédiaire d'une platine de fixation 3. La platine de fixation 3 comprend une plaque de fond 4 qui est dotée de trois joues 5 chacune dotée d'un perçage 6.

Comme on peut le voir sur la figure 1, la platine de fixation 3 peut être également dotée de capotages 7 supérieure et/ou inférieure qui sont fixés, par exemple, par soudage sur les trois joues 5.

La platine de fixation 3 est rapportée sur le châssis 8 du véhicule et est fixée à ce dernier, par exemple, par une série de vis 9 ou rivet.

Les deux rouleaux 2 sont reliés à la platine de fixation 3 par un axe 13 qui traverse les deux rouleaux 2 et les perçages 6 de trois joues 5.

Le point novateur de ce butoir d'accostage 1 tient à la structure même de ses rouleaux 2.

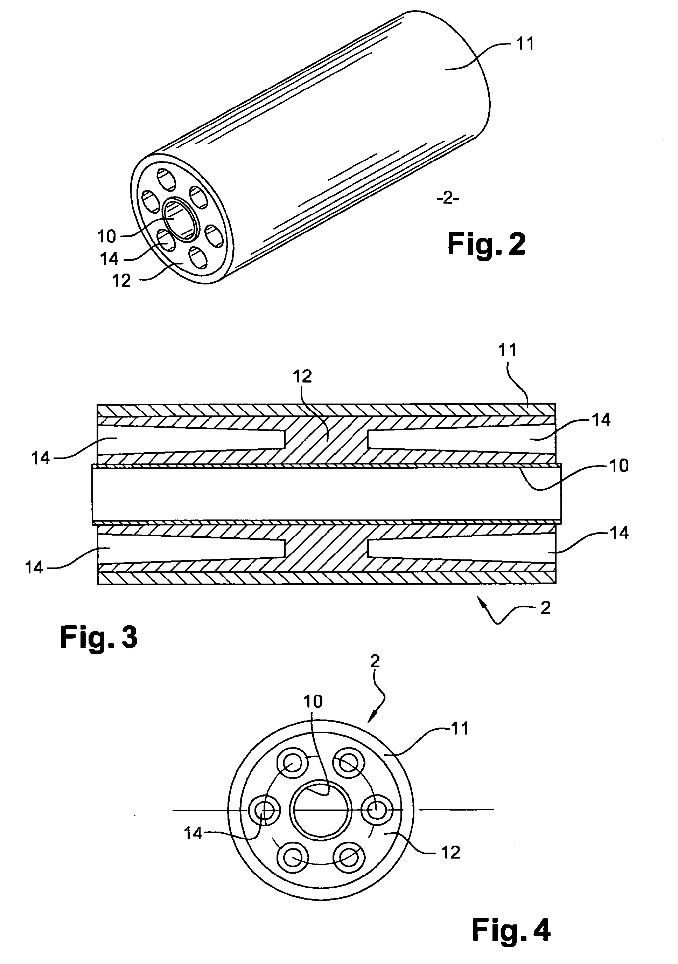

En effet, comme on peut le voir plus clairement sur figures 3 et 4, le rouleau 2 présente une structure monolithique à trois composants à savoir une bague interne en acier, une coque tubulaire 11 de protection en acier et une âme 12 élastique en caoutchouc adhérisé sur la bague 10 interne et sur la coque 11 de manière à interdire tout mouvement relatif de l'âme 12 par rapport à la bague 10 interne et au tube 11 externe.

Dans le rouleau 2 représenté aux figures 2 à 4, la coque 11 se présente sous la forme d'un tube cylindrique.

L'âme 12 élastique est pourvue de cavités 14 qui ont une fonction important de permettre d'absorber la déformation de l'âme 12 élastique lors d'un contact avec le quai.

Dans l'exemple illustré, l'âme 12 élastique est dotée de deux séries de six cavités 14 tronconiques borgnes qui débouchent que les faces latérales du rouleau 2.

Les surfaces fonctionnelles du rouleau 2 c'est-à-dire la surface externe du tube 11 et la surface interne de la bague 10 sont pourvues d'un traitement de surface de type par exemple zingage.

Un aspect important de l'invention tient au procédé de réalisation de rouleau 2 dans lequel il est prévu les étapes suivante

La coque 11 et la bague 10 engagée dans la coque 11 et dépourvus de traitement de surface sont positionnés dans un moule ;

Une matière élastique est injectée dans l'entrefer délimité par la coque 11 et la bague 10 pour former l'âme 12 du rouleau 2 ;

La matière élastique est vulcanisée en produisant une adhérisation de l'âme 12 à la bague 10 et au tube 11.

La surface extérieure du tube 11 et la surface intérieure de la bague 10 reçoivent un traitement de surface qui leurs permettra de faire face aux sollicitations.

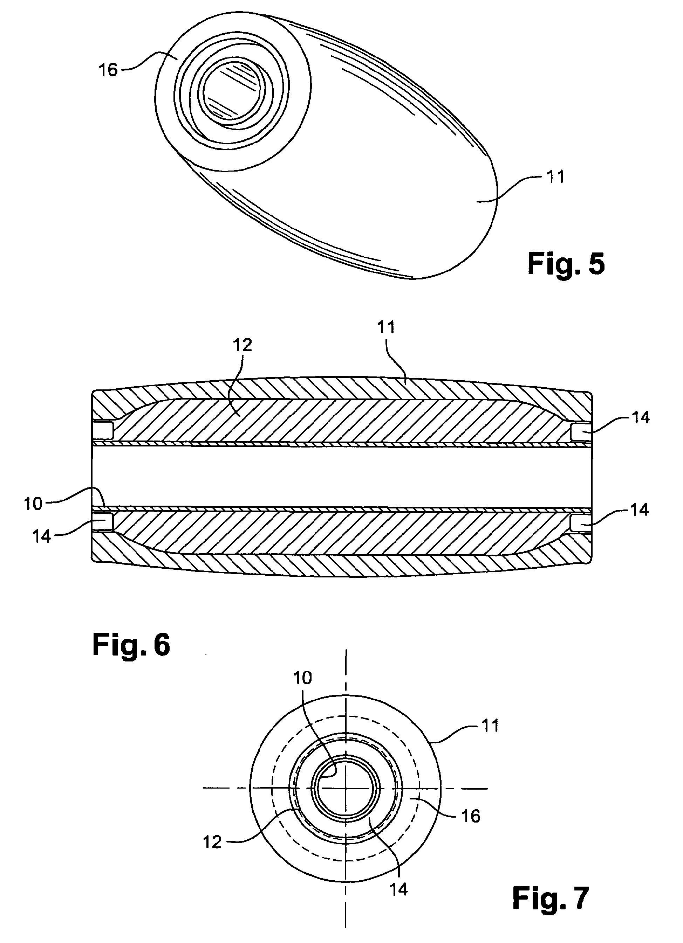

Les figures 5 à 7 montrent une autre de réalisation d'un rouleau 2 qui comprend une coque 11 de protection, une âme élastique 12 et une bague 10.

Comme on peut le voir sur ces figures, la coque 11 possède une forme sensiblement en ellipsoïde. Par forme sensiblement en ellipsoïde, on entend que la coque 11 présente une forme de révolution bombée qui lui donne une forme générale en olive.

Cette forme s'avère bénéfique lors d'un accostage au cours duquel le véhicule vient en appui contre le quai selon une direction que n'est pas parfaitement perpendiculaire au quai. Dans ce cas de figure courant, le véhicule se présente légèrement en biais contre le quai. Le rouleau 2 en ellipsoïde permet un contact satisfaisant avec le quai grâce à sa surface bombée.

On peut voir que la coque 11 est dotée de retours radiaux sur ses faces latérales.

L'âme 12 élastique est insérée entre la coque 11 et le tube 10 et est adhérisée sur les surfaces internes de ces derniers.

Le retour 16 disposé à chaque extrémité de la coque assure également une retenue mécanique de l'âme 12 élastique.

L'âme 12 élastique comprend des cavités 14 qui, dans l'exemple illustré, prennent la forme d'une rainure annulaire de section carrée.

Ainsi l'invention fournit un butoir d'accostage 1 ayant un rouleau 2 qui possède une âme 12 élastique protégé pour une coque 11 métallique. La longévité du butoir est ainsi grandement améliorée tout en préservant la faculté de déformation de l'âme 12.

Selon la configuration de la face arrière du véhicule, il est possible de prévoir un butoir d'accostage 1 équipé d'un rouleau 2.

Dans l'exemple représente sur le dessin, le butoir est pourvu de deux rouleaux 2 coaxiaux ; il est également envisageable de positionner deux rouleaux 2 (ou plus) de manière superposée. Le platine de fixation 3 est pour cela adaptée en conséquence.

Bien entendu, l'invention n'est pas limitée à la forme de réalisation décrite ci-dessus à titre d'exemple non limitatif mais elle en embrasse au contraire toute les formes de réalisation.

## Revendications

1. Butoir d'accostage (1) rotatif destiné à être fixé sur la face arrière d'un véhicule **caractérisé en ce que** le butoir d'accostage (1) comprend au moins un rouleau (2) comprenant une bague (10) interne en acier, une coque (11) de protection externe en acier et une âme (12) élastique en caoutchouc adhérisé sur la bague (10) et sur la coque (11) et des moyens de fixation du rouleau (2) sur la face arrière du véhicule.

2. Butoir d'accostage (1) selon la revendication 1, **caractérisé en ce que** la face extérieure une coque (11) et la face intérieure de la bague (10) reçoivent un traitement thermique.

3. Butoir d'accostage (1) selon la revendication 1 ou la revendication 2, **caractérisé en ce que** la coque (11) présente une forme en ellipsoïde et est dotée d'un retour (14) radial à chacune de ses extrémités.

4. Butoir d'accostage selon l'une la revendication 1 ou la revendication 2, **caractérisé en ce que** la coque (11) présente une forme cylindrique.

5. Butoir d'accostage (1) selon l'une des revendications 1 à 4, **caractérisé en ce que** le l'âme (12) élastique comprend une série de cavités (14) permettant à l'âme (12) de se déformer

6. Butoir d'accostage (1) selon la revendication 5 **caractérisé en ce que** l'âme (12) présente deux séries de six cavités (14) tronconiques borgnes orientées longitudinalement.

7. Butoir d'accostage (1) selon la revendication 5, **caractérisé en ce que** l'âme (12) présente une rainure (14) annulaire à chaque de ses extrémités.

8. Butoir d'accostage (1) selon l'une des revendications 1 à 7, **caractérisé en ce que** les moyens de fixation comprennent une platine de fixation (3) qui reçoit un axe (13) sur lequel au moins un rouleau (2) est engagé.

9. Butoir d'accostage (1) selon l'une des revendications 1 à 8, **caractérisé en ce que** la platine comprend une plaque de fond sur laquelle sont fixées au moins deux joues pourvues chacune d'un perçage (6) destiné à recevoir l'axe (13).

10. Butoir d'accostage (1) selon l'une des revendications 1 à 9, **caractérisé en ce que** l'âme (12) est réalisée dans un caoutchouc haute résilience.

11. Procédé de fabrication d'un rouleau (2) pour un butoir d'accostage (1) selon l'une des revendications 1 à 10, **caractérisé en ce que** le procédé présente les étapes consistant à
- positionner dans un moule la coque (11) et la bague (10) engagée dans la coque (11) dépourvues de traitement de surface;
- injecter une matière élastique crue dans l'entrefer délimité par la coque (11) et la bague (10) pour former l'âme (12) du rouleau (2) ;
- vulcaniser la matière élastique en produisant une adhérisation de l'âme (12) à la bague (10) et au tube (11) ;
- effectuer un traitement de surface sur la surface extérieure du tube (11) et la surface intérieure de la bague (10).

## Patentansprüche

1. Drehbarer Anlegepuffer (1), der dazu bestimmt ist, am Heck eines Fahrzeugs befestigt zu sein, **dadurch gekennzeichnet, dass** der Anlegepuffer (1) mindestens eine Walze (2), die einen internen Ring (10) aus Stahl umfasst, eine externe Schutzhülse (11) und einen elastischen, am Ring (10) und an der Hülse (11) anliegenden Gummikern (12) und Befestigungsmittel der Walze (2) am Heck des Fahrzeugs umfasst.

2. Anlegepuffer (1) nach Anspruch 1, **dadurch gekennzeichnet, dass** die Außenseite der Hülse (11) und die Innenseite des Rings (10) thermisch behandelt sind.

3. Anlegepuffer (1) nach Anspruch 1 oder Anspruch 2, **dadurch gekennzeichnet, dass** die Hülse (11) eine ellipsoidische Form aufweist und an jeden ihrer Enden mit einem radialen Rücksprung (14) ausgestattet ist.

4. Anlegepuffer nach Anspruch 1 oder 2, **dadurch gekennzeichnet, dass** Hülse (11) eine zylindrische Form aufweist.

5. Anlegepuffer (1) nach einem der Ansprüche 1 bis 4, **dadurch gekennzeichnet, dass** der elastische Kern (12) eine Reihe von Kavitäten (14) aufweist, die es dem Kern (12) erlauben, sich zu verformen.

6. Anlegepuffer (1) nach Anspruch 5, **dadurch gekennzeichnet, dass** der Kern (12) zwei Reihen mit jeweils sechs kegelstumpfartigen Grundkavitäten (14) aufweist, die längs ausgerichtet sind.

7. Anlegepuffer (1) nach Anspruch 5, **dadurch gekennzeichnet, dass** der Kern (12) an jedem seiner Enden eine ringförmige Rille (14) aufweist.

8. Anlegepuffer (1) nach einem der Ansprüche 1 bis 7, **dadurch gekennzeichnet, dass** die Befestigungsmittel eine Befestigungsplatte (3) umfassen, die eine Achse (13) aufnimmt, auf der mindestens eine Walze (2) befestigt ist.

9. Anlegepuffer (1) nach einem der Ansprüche 1 bis 8, **dadurch gekennzeichnet, dass** die Platte eine Grundplatte umfasst, auf der mindestens zwei Wangen befestigt sind, die jeweils mit einer Bohrung (6) ausgestattet sind, die dazu bestimmt ist, die Achse (13) aufzunehmen.

10. Anlegepuffer (1) nach einem der Ansprüche 1 bis 9, **dadurch gekennzeichnet, dass** der Kern (12) aus einem Gummi mit hoher Elastizität hergestellt ist.

11. Herstellungsverfahren einer Walze (2) für einen Anlegepuffer (1) nach einem der Ansprüche 1 bis 10, **dadurch gekennzeichnet, dass** das Verfahren die folgenden Schritte umfasst:
- Positionieren der Hülse (11) und des in die Hülse (11) eingeführten Rings (10) ohne Oberflächenbearbeitung in einer Form,
- Spritzen eines rohen elastischen Materials in den Spalt, der von der Hülse (11) und dem Ring (10) begrenzt wird, um den Kern (12) der Walze (2) zu formen,
- Vulkanisieren des elastischen Materials bei Herstellung einer Haftung des Kerns (12) auf dem Ring (10) und auf dem Rohr (11),
- Durchführung einer Oberflächenbearbeitung auf der Außenseite des Rohrs (11) und der Innenseite des Rings (10).

## Claims

1. A rotary docking stop (1) designed to be fastened on the rear face of a vehicle, **characterized in that** the docking stop (1) comprises at least one roller (2) comprising an inner steel ring (10), and a steel outer protective hull (11) and an elastic rubber core (12) adhered on the ring (10) and on the hull (11) and means for fastening the roller (2) on the rear face of the vehicle.

2. The docking stop (1) according to claim 1, **characterized in that** the outer face of the hull (11) and the inner face of the ring (10) receive a thermal treatment.

3. The docking stop (1) according to claim 1 or claim 2, **characterized in that** the hull (11) has an ellipsoid shape and is equipped with a radial return (14) at each of its ends.

4. The docking stop according to one of claim 1 or claim 2, **characterized in that** the hull (11) has a cylindrical shape.

5. The docking stop (1) according to one of claims 1 to 4, **characterized in that** the elastic core (12) comprises a series of cavities (14) allowing the core (12) to deform.

6. The docking stop (1) according to claim 5, **characterized in that** the core (12) has two series of six blind tapered cavities (14) oriented longitudinally.

7. The docking stop (1) according to claim 5, **characterized in that** the core (12) has an annular slot (14) at each of its ends.

8. The docking stop (1) according to one of claims 1 to 7, **characterized in that** the fastening means comprise a fastening platen (3) that receives a shaft (13) on which at least one roller (2) is engaged.

9. The docking stop (1) according to one of claims 1 to 8, **characterized in that** the platen comprises a bottom plate on which at least two cheeks are fastened each provided with a piercing (6) designed to receive the shaft (13).

10. The docking stop (1) according to one of claims 1 to 9, **characterized in that** the core (12) is made from a high resilience rubber.

11. A method for manufacturing a roller (2) for a docking stop (1) according to one of claims 1 to 10, **characterized in that** the method includes the following steps:
- positioning, in a mold, the hull (11) and the ring (10) engaged in the hull (11), both without any surface treatment;
- injecting a raw elastic material into the air gap delimited by the hull (11) and the ring (10) to form the core (12) of the roller (2);
- vulcanizing the elastic material by producing adhesion of the core (12) to the ring (10) and the tube (11);
- performing a surface treatment on the outer surface of the tube (11) and the inner surface of the ring (10).
